# EUROPEAN PATENT SPECIFICATION

(11) **EP 3 269 537 B1**
(45) Date of publication and mention of the grant of the patent: **24.04.2019**
(21) Application number: 17181428.8
(22) Date of filing: 14.07.2017
(51) Int. Cl.: B29D 30/00, B29C 31/08, B65H 75/02, B65H 18/16, B65H 16/00, B65H 20/34, B65H 75/36

(54) **STORAGE APPARATUS FOR RUBBER ELEMENTS**
AUFBEWAHRUNGSVORRICHTUNG FÜR KAUTSCHUKELEMENTE
APPAREIL DE STOCKAGE POUR ÉLÉMENTS EN CAOUTCHOUC

(30) Priority: 15.07.2016 IT 201600074490
(43) Date of publication of application: 17.01.2018
(73) Proprietor: Bridgestone Europe NV, 1932 Zaventem (BE)
(72) Inventor: Stella, Luca, 00128 Roma (IT); Risi, Fabio, 00128 Roma (IT)
(74) Representative: Marchetti, Alessio

(56) References cited:
- EP-A1- 0 621 124
- DE-A1- 2 408 590
- JP-A- 2004 338 875
- US-A- 1 813 994
- US-A- 1 862 615
- US-B1- 6 719 236

## Description

### Technical field of the invention

The present invention relates to the tyre manufacturing sector. In particular, the invention relates to an apparatus for storing oblong rubber elements, for example at the outlet of a mixer or an extruder, for subsequent use.

### Background

An example for a storage apparatus for a rubber strip wherein the strip together with a liner is wound in a spiral manner is disclosed in JP 2004 338875 A.

One of the key steps in the manufacture of tyres is the rubber extrusion process, particularly as regards the formation of tubular elements. At the output of the extruders a certain amount of material is commonly generated that does not conform to the specifications, and that therefore cannot be directly processed during subsequent steps. This occurs, for example, during the startup and termination steps of the extruder operation. In current processes, the material that does not conform must be reintroduced into the rubber mixer in order to be extruded once more. For this reason, the material in question is often denoted as *"TMA rubber"* (*To Mix Again rubber*).

However, in order to meet the quantitative and qualitative parameters of the tyre manufacturing process, such "TMA" material cannot be added to "fresh" rubber in indiscriminate amounts, nor, in general, can it be remixed on its own. In general terms, the amount of such material added during the mixing step must be minimal.

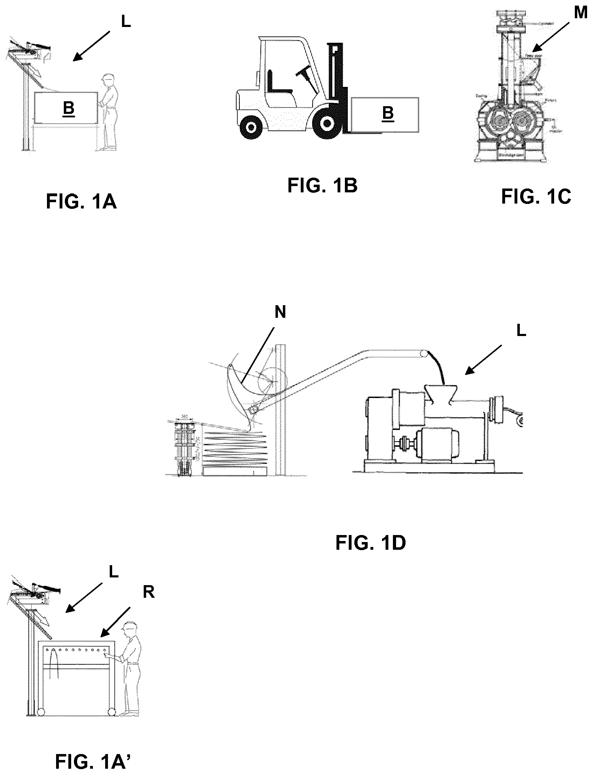

Figures 1A to 1D schematically illustrate, with exemplary side views, the aforementioned manufacturing steps.

In general terms, the TMA material at the output of extrusion line L is collected in pallet or bin type containers B (Figure 1A). From there, the container B is transported using forklift trucks or low-lift platform trucks (Figure 1B) back to the mixing apparatus M (Figure 1C). Within this device the TMA material is mixed with "fresh" rubber that has not already been previously extruded. At this point, the rubber ribbons N at the output of the apparatus M are fed into the input of the extrusion line L (Figure 1D). During this latter step, it is also possible that short ribbon portions containing TMA material may be joined to ribbons containing only "fresh" rubber.

In a variation, shown in Figure 1A', the TMA material at the output of the extrusion line L may be temporarily stored on standard racks R, before being transported within the above cited containers B.

The need to reintroduce the TMA material into the mixing and extrusion process decreases the overall productivity of the tyre manufacturing plant, in particular by increasing timescales, costs, the amount of labor required, energy consumption and the overall complexity of the process.

Storage as set out in the prior art, both within the aforementioned containers and on standard racks, necessarily determines adhesion between adjacent strips of rubber, rendering the subsequent manipulation of the material difficult to standardize.

It should also be noted that the problem of the storage of oblong rubber elements is relevant also during tyre manufacturing process steps that are different from those mentioned above, for example for pre-formed strips or ribbons downstream of a mixing station.

### Summary of the Invention

The technical problem posed and solved by the present invention is therefore that of providing a storage apparatus that makes it possible to alleviate the aforementioned drawbacks with reference to the prior art.

This problem is resolved by means of a storage apparatus according to claim 1.

Preferred characteristics of the present invention are the object of the dependent claims.

The invention provides an efficient and effective apparatus for the temporary storage of oblong rubber elements. Such a device is specifically suitable for use in the manufacture of a tyre, especially for the storage of oblong "TMA" material elements at the output of an extrusion line and that must be restarted on such a line.

As mentioned, the apparatus is suitable for the storage of oblong elements in the form of tubes, ribbons or otherwise, which, for simplicity, will subsequently be called strips.

The apparatus is based on a revolving structure formed by a plurality of arms, which rotates in relation to a spiral guide path according to a preferably vertical longitudinal axis. Support elements for the strips are guided on this path in a sliding manner in such a way that they are associated with the arms. In one embodiment, the revolving structure can be defined in the form of a carousel.

In preferred embodiments, the apparatus of the invention is portable and, advantageously, movable on castors. It can incorporate a power supply thereof or else it can be connected to external energy sources, the latter possibly provided in workstations prepared for such a purpose.

The invention makes it possible to render the entire tyre production cycle more efficient and repeatable.

In particular, the apparatus of the invention allows for the simple, efficient and low impact storage of rubber strips at the output of the extrusion line or other units within the plant. In comparison to the prior art the device makes it possible to limit the handling and re-processing of TMA material. Furthermore, it allows for a high accumulation capacity within a very compact space, especially compared to standard racks used in the prior art.

In addition, by virtue of the storage method, the rubber strips can be directly reused in subsequent processing steps, for example being restarted on the extrusion line without having to undergo a second mixing. In the latter application, the invention makes it possible to obtain compounds that are more repetitive, and more adherent to nominal specifications, and to therefore obtain higher quality tyres. In particular, the stored strips can be selectively fed into the extruder based upon the characteristics of the component TMA material and those of the extrusion in progress.

The apparatus of the invention therefore allows for high usage flexibility of the material, especially of TMA type material, providing an accumulation *"buffer"* that can be managed in an easy and repeatable manner depending upon actual manufacturing requirements.

The apparatus also stops the stored material from sticking and becoming difficult to manage and manipulate.

As mentioned above, although the present invention is described primarily with reference to the storage of rubber strips to be reinserted into an extrusion process, it may also be applied in the case of different successive uses for such strips.

Other advantages, characteristics and the usage methods for the present invention, will become clear from the following detailed description of some embodiments, given purely by way of non-limiting examples.

### Brief description of the figures

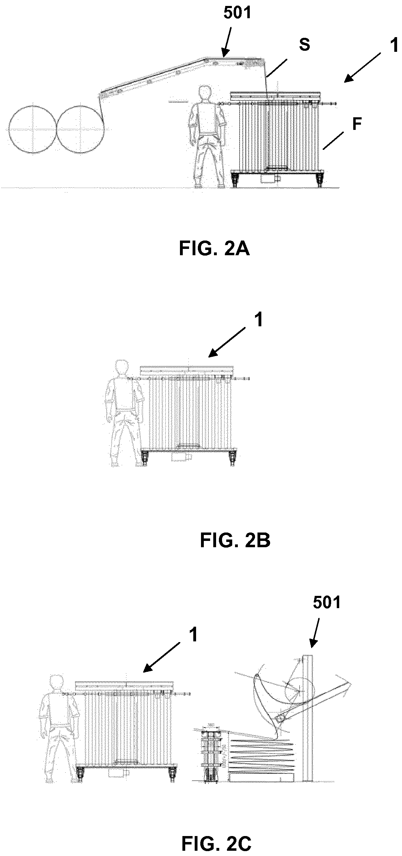

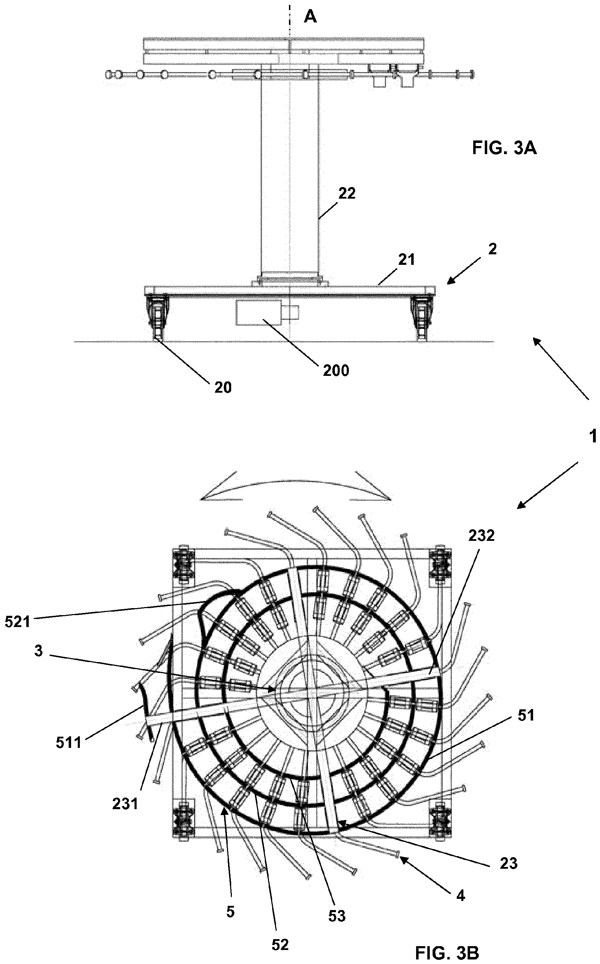

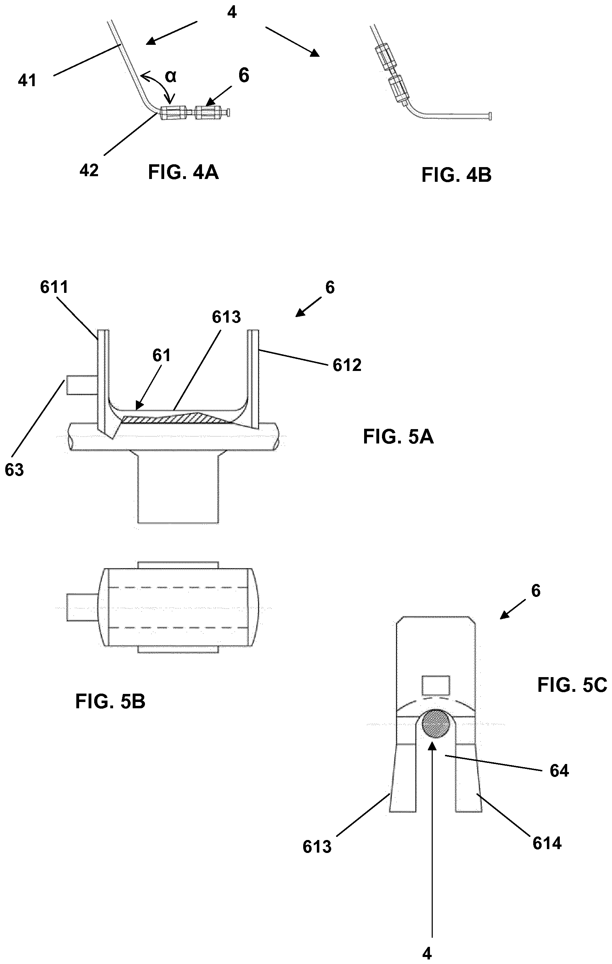

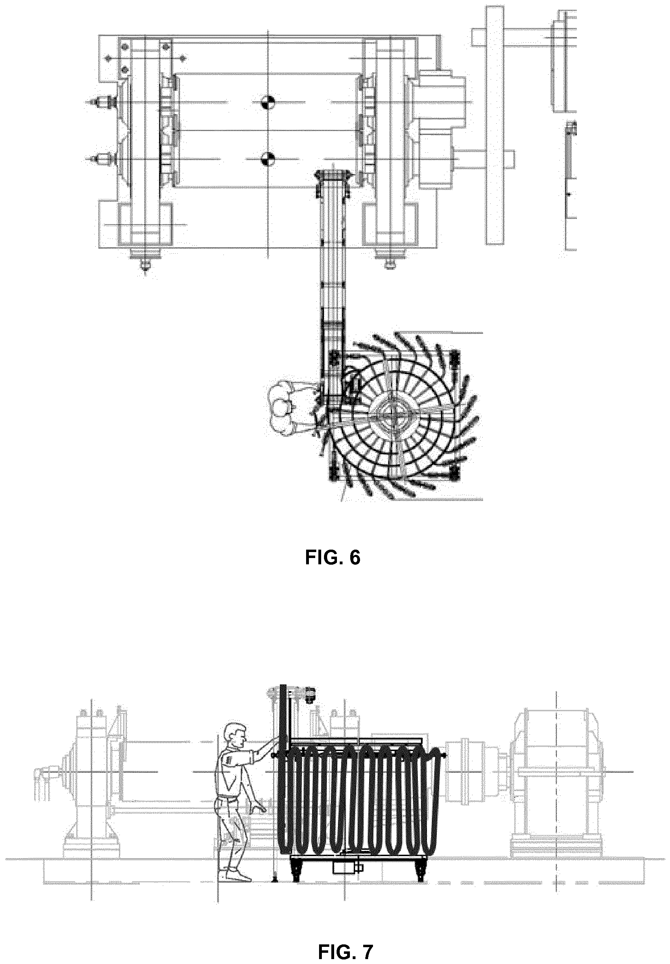

Reference will be made to the figures of the accompanying drawings, wherein:
▪ Figures 1A, 1A', 1B, 1C and 1D have already been introduced above and show schematic front and side views of components employed within a prior art tyre manufacturing process;
▪ Figures 2A, 2B and 2C show schematic front and side views of components employed within a tyre manufacturing process that uses a preferred embodiment of a storage device according to the present invention;
▪ Figures 3A and 3B refer to the storage apparatus of Figure 2A, showing a front view and a plan view, respectively;
▪ Figures 4A and 4B each show a plan view of a radial arm of the apparatus of Figure 3A, of a first and a second working configuration, respectively;
▪ Figures 5A, 5B and 5C refer to a preferred embodiment of a support element of a rubber strip of the apparatus of Figure 3A, showing a front view, a plan view from above and a side view, respectively;
▪ Figures 6 and 7 refer to the apparatus of Figure 3A inserted into a tyre manufacturing plant, showing a schematic view from above and a schematic front view of part of such a plan, respectively.

The dimensions and shapes represented in the figures introduced above are to be understood as exemplary.

### Detailed description of preferred embodiments

Figures 2A to 2C show, in an exemplary and schematic way, some steps of a tyre manufacturing method that employs a preferred embodiment of the storage apparatus of the invention, the latter denoted in the entirety thereof by 1.

Near the exit of an extrusion station or line denoted here in the entirety thereof with 501, the method provides the collection and storage of TMA material strips S, within the apparatus 1, as shown in Figure 2A. In particular, as will be explained in more detail shortly, the apparatus 1 is configured in such a way as to allow for the storage of rubber strips S in the form of hanging festoons F arranged according a spiral pattern.

The apparatus 1, loaded with rubber strips, allows for the storage thereof within the same area or else within a remote location, as shown in Figure 2B.

As shown in Figure 2C, when process methods require/allow it, the storage apparatus 1 is brought into proximity with the entrance of an extrusion line, which in the case considered here is the same extrusion line 501 considered above.

In such an extrusion line the TMA material strips can be cohesive, i.e. attached, in a longitudinal sequence to other "fresh" rubber strips at the output of a mixer.

The storage apparatus 1 and the components thereof will now be described in more detail with reference to figures 3A to 5C.

Apparatus 1 comprises, firstly, a fixed frame 2, which in the present embodiment is principally comprised of a horizontal platform 21, a vertical riser 22, which rises up from the platform 21, and a cruciform structure 23, which is also horizontal, arranged above the vertical riser 22. In particular, the cruciform structure 23 is formed by two mutually orthogonal cross members 231 and 232.

Preferably, the frame 2 is movable in relation to the floor, such that the apparatus 1 is rendered portable, i.e. it can be easily moved. In the present example, below the platform 21, one or more wheels 20 are provided.

Within the riser 22 there extends a shaft 3, driven in rotation with respect to the frame 2 according to a longitudinal axis A. The latter also corresponds to a longitudinal axis of the riser 22 and, in this example, it is arranged vertically. Hereinafter, some elements will be referred to as "proximal" or "distal" depending upon whether they are arranged closer to or farther away from the axis A.

The rotational drive can be performed through actuating means, such as a motor and related transmission means, mounted on the frame 2 and denoted by way of example with 200. Alternatively, a selective coupling for the shaft 3 with actuating means can be provided, for example, also in this case, a motor or a related connection, arranged at work or storage stations.

The power for the movement of the shaft 3 can also be obtained by means of *on-board* means, or else by means of connection to external sources.

By way of example, velocities within a range of 0.2-0.6 revolutions/minute may be provided.

The shaft 3 carries a plurality of radial arms integral therewith, each globally denoted by 4. In the present example twenty-four radial arms 4 are provided. Indeed, the radial arms 4 extend substantially along a radial plane with respect to the axis A, i.e. they are substantially orthogonal thereto.

Each arm 4 has a first operating segment 41, arranged proximal to the longitudinal axis A and branching radially with respect to the same axis. Each arm 4 also carries a second collection segment 42 arranged distally with respect to the axis A and obliquely with respect to the first operating segment 41. In particular, in the present example, the two segments 41 and 42 enclose an obtuse angle α.

Cruciform structure 23 integrally supports a spiral guide path 5 centered around the axis A and arranged above and adjacent to the arms 4.

In the present example, the path 5 describes three concentric spirals, denoted in a distal - median - proximal order, with 51, 52 and 53, respectively. The path 5 is defined by an oblong element, such as a bar or string, which indeed extends according to a spiral. At a distal portion thereof, the spiral path 5 carries two contoured engagement and disengagement sections denoted by 521 and 511, respectively, and obtained on distal loop 51 and on median loop 52.

The engagement section 521 is substantially located at an intersection between the operating segment 41 and the collection segment 42 of the arms 4.

The disengagement section 511 is located at a distal portion of the collection segment 42 of the arms 4.

The function of these sections 511 and 521 will be explained later.

One or more support devices 6 for the rubber strips are mounted or mountable on each radial arm 4. In the present example, the overall configuration is such that each radial arm 4 is suitable for receiving two support devices 6 arranged radially spaced apart thereupon.

The support devices 6 mounted on each arm are movable by sliding along thereupon, and therefore, in particular, in a radial direction relative to the axis A.

Depending upon the working step, and in particular the loading step, of the apparatus 1, each support device 6 is selectively arranged at the operating segment 41 or of the collection segment 42, as shown in Figures 4A and 4B.

As shown in more detail in Figures 5A to 5C, each support device 6 has, firstly, a receiving seat 61 for a portion of the rubber strip. In the present example, such a seat is open above and defined by two side flanges 611 and 612, mutually spaced apart in a radial direction and by a central support surface 613.

Each device 6 also has means of engaging with the guide path 5, which in this example are obtained by means of the two side flanges 611 and 612. The two flanges 611 and 612 engage, internally and from the bottom, with a track defined between two adjacent path spirals 51-52 and 52-53.

Each device 6 also has a spacer element 63, extending radially towards the distal end, in order to precisely maintain a distance with a similar support device mounted on the same radial arm 4. Such a spacer element 63 acts in particular when the devices are off the guide path 5.

Each device 6 also has, at the bottom, a seat for coupling with the respective arm, denoted by 64. In the present example, such a coupling seat 64 is defined in the form of a groove between two side shaped appendages 613 and 614, distal and proximal respectively, extending below the seat 61. The outer profile of such appendices 613 and 614 is divergent from top to bottom, or widened, in order to avoid adhesion between rubber strips that are supported at adjacent spiral pairs, as will be better understood with reference to the operational methods of the apparatus 1.

In use, during the above-mentioned storage step, a rubber strip is sequentially supported within receiving seats 61 of support devices 6 mounted on radial arms 4 that are circumferentially adjacent, according to a spiral arrangement defined by the guide path 5.

The circumferentially adjacent radial arms 4 are indeed mounted mutually spaced apart in a circumferential direction, in such a way as to allow the rubber strip to define therebetween a hanging loop, i.e. arranged as festoons.

In order for the rubber strip or strips to engage with the apparatus 1, this is operated with two support devices 6 arranged on each arm 4 located at the respective collection segment 42, as shown in Figure 4A. The rotation of the arms 4 and the provision of the engagement section 521 causes the device 6, arranged proximally upon the segment 42, to be induced to engage with the guide path 5, traveling along it in a direction from distal to proximal, which corresponds, in this example, to a counterclockwise rotation of the shaft 3. The proximal devices 6 on the arms 4 indeed engage with the path at the passage of the same arm in the vicinity of the engagement section 521. Elastic contracting means can be provided, such as springs, in order to force each support device 6 to engage with the guide path 5, arranged, for example, at the collection segment 42.

Therefore, each support device 6 is guided in a sliding manner along the respective radial arm 4 according to the guide path 5 such as to move towards the center of the spiral, in a winding direction of the rubber strips within the same guide path 5. In this configuration and at the end of the overall winding, the devices 6 engage with the arms 4 according to the configuration of Figure 4B.

In order to implement the winding of the rubber according to the spiral path with the aforesaid loops, the strip can be fed from a conveyor, for example a conveyor belt, with a relative speed of advancing of the conveyor and rotation of the shaft that is such as to allow for the formation of loops.

For the unwinding of the rubber strip at the end of the storage period, the shaft 3 is rotated in the opposite direction (clockwise in this example) and the support devices 6 are moved towards the periphery of the guide path 5 and disengage therefrom, also disengaging the operating segment 41, at the disengagement section 511.

In embodiment variants, the reciprocal motion of the spiral guide path and radial arms can be reversed, i.e. the former can be mobile and the second fixed.

The invention has heretofore been described with reference to preferred embodiments. It is to be understood that there may be other embodiments that relate to the same inventive nucleus, as defined by the scope of protection of the claims set out below.

## Claims

1. Storage apparatus (1) for elements in the form of a strip,
in particular rubber strips for the manufacture of a tyre,
which storage apparatus (1) comprises:
▪ a frame (2);
▪ a shaft (3) mounted on said frame (2) and extending according to a longitudinal axis (A) thereof, which shaft (3) carries a plurality of radial arms (4) that are orthogonal to said longitudinal axis (A);
▪ a guide path (5) in the form of a spiral mounted on said frame (2) and central in relation to said longitudinal axis (A), which guide path (5) is arranged adjacent to said radial arms (4);
▪ a plurality of support devices (6) for the strip shaped elements, wherein each of said support devices (6):
- is mounted or mountable in a sliding manner on a respective radial arm (4),
- has means of engaging (611, 612) with said guide path (5), and
- has a receiving seat (61) of an element in the form of a strip, the overall arrangement being such that, in use, an element is supported, in sequence, within receiving seats (61) of support devices (6) mounted on adjacent radial arms (4),
wherein said guide path (5) and/or said radial arms (4) can be operated according to a reciprocal rotational working motion around said longitudinal axis (A),
the overall configuration being such that each support device (6) is guided in a sliding manner along the respective radial arm (4) according to said guide path (5) in a winding and/or unwinding direction of the elements in the form of a strip within said guide path (5).

2. Storage apparatus (1) according to claim 1, wherein the overall configuration is such that said longitudinal axis (A) is arranged, in use, essentially vertically.

3. Storage apparatus (1) according to claim 1 or 2, wherein the overall configuration is such that said guide path (5) is fixed and said radial arms (4) revolve.

4. Storage apparatus (1) according to any of the preceding claims, wherein said guide path (5) is arranged above and adjacent to said radial arms (4).

5. Storage apparatus (1) according to any of the preceding claims, wherein said guide path (5) comprises a contoured disengagement portion (511) that is distal in relation to said longitudinal axis (A), which disengagement portion (511) is configured in order to allow for the exit of one of said support devices (6) from said guide path (5).

6. Storage apparatus (1) according to any of the preceding claims, wherein said guide path (5) comprises a contoured engagement portion (521) that is distal in relation to said longitudinal axis (A), which engagement portion (521) is configured in order to allow for the entry of one of said support devices (6) within said guide path (5).

7. Storage device (1) according to any of the preceding claims, wherein each of said radial arms (4) has a first operating segment (41) that is proximal to said longitudinal axis (A) and radially branching with respect to the same longitudinal axis (A) and a second collection segment (42) that is distal from said longitudinal axis (A) and oblique with respect to said first operating segment (41).

8. Storage apparatus (1) according to claims 6 and 7, wherein said engagement portion (521) of said guide path (5) is arranged at an intersection between said first operating segment (41) and said second collection segment (42).

9. Storage device (1) according to any of the preceding claims, wherein adjacent radial arms (4) are mounted mutually spaced apart in a circumferential direction, such as to allow an element in the form of a strip to define a hanging loop between them.

10. Storage apparatus (1) according to any of the preceding claims, wherein said radial arms (4) are arranged circumferentially spaced apart around said longitudinal axis (A).

11. Storage apparatus (1) according to any of the preceding claims, wherein each of said support devices (6) has an enlarged portion (613, 614) in a radial direction, configured in order to prevent contact between elements in the strip form, supported in circumferentially adjacent positions.

12. Storage apparatus (1) according to any of the preceding claims, wherein said engagement means comprise, for each support device (6), a pair of side flanges (611, 612) radially spaced apart and configured in order to engage with said guide path (5) preferably from the bottom to the top.

13. Storage apparatus (1) according to the preceding claim, wherein said receiving seat (61) is defined between said two side flanges (611, 612).

14. Storage device (1) according to any of the preceding claims, wherein each of said support devices (6) has a spacer element (63) with respect to another support device mounted adjacent to the same radial arm (4).

15. Storage apparatus (1) according to any of the preceding claims, comprising rotational actuating means (200) of said radial arms (4) and/or said guide path (5).

16. Storage apparatus (1) according to any of the preceding claims, comprising coupling means with an actuation that is external to said radial arms (4) and/or said guide path (5).

17. Storage apparatus (1) according to any of the preceding claims, wherein said frame (2) is movable in relation to the walk-over flooring, carrying for example one or more wheels (20).

18. Storage apparatus (1) according to any of the preceding claims, wherein said frame (2) comprises a platform (21), preferably horizontal, upon which said shaft (3) is mounted.

## Patentansprüche

1. Aufbewahrungsvorrichtung (1) für Elemente in Form eines Streifens, insbesondere Gummistreifen für die Herstellung eines Reifens,
wobei die Aufbewahrungsvorrichtung (1) umfasst:
▪ einen Rahmen (2);
▪ eine Welle (3), die an dem Rahmen (2) montiert ist und sich gemäß einer Längsachse (A) davon erstreckt, wobei die Welle (3) eine Vielzahl von radialen Armen (4) trägt, die orthogonal zu der Längsachse (A) verlaufen;
▪ eine Führungsbahn (5) in Form einer Spirale, die an dem Rahmen (2) und in Bezug auf die Längsachse (A) mittig montiert ist, wobei die Führungsbahn (5) an die Arme (4) angrenzend angeordnet ist;
▪ eine Vielzahl von Stützvorrichtungen (6) für die streifenförmigen Elemente, wobei jede der Stützvorrichtungen (6):
- an einem jeweiligen radialen Arm (4) auf gleitende Weise montiert oder montierbar ist,
- Mittel zum Eingriff (611, 612) mit der Führungsbahn (5) aufweist, und
- eine Aufnahme (61) eines Elementes in Form eines Streifens aufweist, wobei die Gesamtanordnung derart ist, dass bei der Verwendung ein Element nacheinander innerhalb der Aufnahmen (61) der Stützvorrichtungen (6), die an benachbarten radialen Armen (4) montiert sind, gestützt wird,
wobei die Führungsbahn (5) und/oder die radialen Arme (4) gemäß einer reziproken Dreharbeitsbewegung um die Längsachse (A) herum betätigt werden können,
wobei die Gesamtkonfiguration derart ist, dass jede Stützvorrichtung (6) entlang des jeweiligen radialen Arms (4) gemäß der Führungsbahn (5) in einer Aufwickel- und/oder Abwickelrichtung der Elemente in Form eines Streifens innerhalb der Führungsbahn (5) auf gleitende Weise geführt wird.

2. Aufbewahrungsvorrichtung (1) nach Anspruch 1, wobei die Gesamtkonfiguration derart ist, dass die Längsachse (A) im Gebrauch im Wesentlichen vertikal angeordnet ist.

3. Aufbewahrungsvorrichtung (1) nach Anspruch 1 oder 2, wobei die Gesamtkonfiguration derart ist, dass die Führungsbahn (5) fixiert ist und die radialen Arme (4) rotieren.

4. Aufbewahrungsvorrichtung (1) nach einem der vorstehenden Ansprüche, wobei die Führungsbahn (5) oberhalb und angrenzend an die radialen Arme (4) angeordnet ist.

5. Aufbewahrungsvorrichtung (1) nach einem der vorstehenden Ansprüche, wobei die Führungsbahn (5) einen konturierten Loslösungsabschnitt (511) umfasst, der zu der Längsachse (A) in einer distalen Beziehung steht, wobei der Loslösungsabschnitt (511) dazu konfiguriert ist, den Austritt einer der Stützvorrichtungen (6) aus der Führungsbahn (5) zu erlauben.

6. Aufbewahrungsvorrichtung (1) nach einem der vorstehenden Ansprüche, wobei die Führungsbahn (5) einen konturierten Eingriffsabschnitt (521) umfasst, der zu der Längsachse (A) in einer distalen Beziehung steht, wobei der Eingriffsabschnitt (521) dazu konfiguriert ist, den Eintritt einer der Stützvorrichtungen (6) in die Führungsbahn (5) zu erlauben.

7. Aufbewahrungsvorrichtung (1) nach einem der vorstehenden Ansprüche, wobei jeder der radialen Arme (4) ein zur Längsachse (A) proximales und in Bezug auf die Längsachse (A) radial abzweigendes erstes Betriebssegment (41) und ein von der Längsachse (A) distales und in Bezug auf das erste Betriebssegment (41) schräges zweites Sammelsegment (42) aufweist.

8. Aufbewahrungsvorrichtung (1) nach den Ansprüchen 6 und 7, wobei der Eingriffsabschnitt (521) der Führungsbahn (5) an einem Schnittpunkt zwischen dem ersten Betriebssegment (41) und dem zweiten Sammelsegment (42) angeordnet ist.

9. Aufbewahrungsvorrichtung (1) nach einem der vorstehenden Ansprüche, wobei benachbarte radiale Arme (4) in einer Umfangsrichtung voneinander beabstandet montiert sind, um einem Element in Form eines Streifens so zu ermöglichen, eine hängende Schleife zwischen ihnen zu definieren.

10. Aufbewahrungsvorrichtung (1) nach einem der vorstehenden Ansprüche, wobei die radialen Arme (4) um die Längsachse (A) herum in Umfangsrichtung beabstandet angeordnet sind.

11. Aufbewahrungsvorrichtung (1) nach einem der vorstehenden Ansprüche, wobei jede der Stützvorrichtungen (6) in einer radialen Richtung einen vergrößerten Abschnitt (613, 614) aufweist, der dazu konfiguriert ist, Kontakt zwischen den Elementen in Form eines Streifens zu verhindern, die in in Umfangsrichtung angrenzenden Positionen abgestützt sind.

12. Aufbewahrungsvorrichtung (1) nach einem der vorstehenden Ansprüche, wobei die Eingriffsmittel für jede Stützvorrichtung (6) ein Paar Seitenflansche (611, 612) umfassen, die radial beabstandet und dazu konfiguriert sind, mit der Führungsbahn (5) vorzugsweise von unten nach oben in Eingriff zu gelangen.

13. Aufbewahrungsvorrichtung (1) nach dem vorstehenden Anspruch, wobei die Aufnahme (61) zwischen den zwei Seitenflanschen (611, 612) definiert ist.

14. Aufbewahrungsvorrichtung (1) nach einem der vorstehenden Ansprüche, wobei jede der Stützvorrichtungen (6) ein Abstandselement (63) in Bezug auf eine weitere Stützvorrichtung aufweist, die benachbart am gleichen radialen Arm (4) montiert ist.

15. Aufbewahrungsvorrichtung (1) nach einem der vorstehenden Ansprüche, umfassend Drehbetätigungsmittel (200) der radialen Arme (4) und/oder der Führungsbahn (5).

16. Aufbewahrungsvorrichtung (1) nach einem der vorstehenden Ansprüche, umfassend Kopplungsmittel mit einer Betätigung, die außerhalb der radialen Arme (4) und/oder der Führungsbahn (5) liegt.

17. Aufbewahrungsvorrichtung (1) nach einem der vorstehenden Ansprüche, wobei der Rahmen (2) in Bezug auf den Bodenbelag zum Hinübergehen beweglich ist und beispielsweise ein oder mehrere Räder (20) trägt.

18. Aufbewahrungsvorrichtung (1) nach einem der vorstehenden Ansprüche, wobei der Rahmen (2) eine Plattform (21), vorzugsweise horizontal, umfasst, auf welcher die Welle (3) montiert ist.

## Revendications

1. Appareil de stockage (1) pour des éléments sous la forme d'une bande,
en particulier des bandes de caoutchouc pour la fabrication d'un pneumatique,
lequel appareil de stockage (1) comprend :
▪ un bâti (2) ;
▪ un arbre (3) monté sur ledit bâti (2) et s'étendant selon un axe longitudinal (A) de celui-ci, lequel arbre (3) porte une pluralité de bras radiaux (4) qui sont orthogonaux audit axe longitudinal (A) ;
▪ une trajectoire de guidage (5) sous la forme d'une spirale montée sur ledit bâti (2) et centrale par rapport audit axe longitudinal (A), laquelle trajectoire de guidage (5) est agencée adjacente auxdits bras radiaux (4) ;
▪ une pluralité de dispositifs de support (6) pour les éléments en forme de bande, dans lequel chacun desdits dispositifs de support (6) :
- est monté ou peut être monté d'une manière coulissante sur un bras radial respectif (4),
- a un moyen de mise en prise (611, 612) avec ladite trajectoire de guidage (5) et
- a un logement de réception (61) d'un élément sous la forme d'une bande, l'agencement global étant tel que, en cours d'utilisation, un élément soit supporté, en séquence, au sein de logements de réception (61) de dispositifs de support (6) montés sur des bras radiaux adjacents (4),
dans lequel ladite trajectoire de guidage (5) et/ou lesdits bras radiaux (4) peuvent être actionnés selon une course de travail de rotation en va-et-vient autour dudit axe longitudinal (A),
la configuration globale étant telle que chaque dispositif de support (6) est guidé d'une manière coulissante le long du bras radial respectif (4) selon ladite trajectoire de guidage (5) dans une direction d'enroulement et/ou de déroulement des éléments sous la forme d'une bande au sein de ladite trajectoire de guidage (5).

2. Appareil de stockage (1) selon la revendication 1, dans lequel la configuration globale est telle que ledit axe longitudinal (A) est agencé, en cours d'utilisation, de façon essentiellement verticale.

3. Appareil de stockage (1) selon la revendication 1 ou 2, dans lequel la configuration globale est telle que ladite trajectoire de guidage (5) est fixe et que lesdits bras radiaux (4) tournent.

4. Appareil de stockage (1) selon l'une quelconque des revendications précédentes, dans lequel ladite trajectoire de guidage (5) est agencée au-dessus desdits, et adjacente auxdits, bras radiaux (4).

5. Appareil de stockage (1) selon l'une quelconque des revendications précédentes, dans lequel ladite trajectoire de guidage (5) comprend une partie de désolidarisation profilée (511) qui est distale par rapport audit axe longitudinal (A), laquelle partie de désolidarisation (511) est configurée afin de permettre la sortie de l'un desdits dispositifs de support (6) de ladite trajectoire de guidage (5).

6. Appareil de stockage (1) selon l'une quelconque des revendications précédentes, dans lequel ladite trajectoire de guidage (5) comprend une partie de mise en prise profilée (521) qui est distale par rapport audit axe longitudinal (A), laquelle partie de mise en prise (521) est configurée afin de permettre l'entrée de l'un desdits dispositifs de support (6) au sein de ladite trajectoire de guidage (5).

7. Dispositif de stockage (1) selon l'une quelconque des revendications précédentes, dans lequel chacun desdits bras radiaux (4) a un premier segment opérationnel (41) qui est proximal par rapport audit axe longitudinal (A) et se ramifiant radialement par rapport au même axe longitudinal (A) et un deuxième segment de collecte (42) qui est distal par rapport audit axe longitudinal (A) et oblique par rapport audit premier segment opérationnel (41).

8. Appareil de stockage (1) selon les revendications 6 et 7, dans lequel ladite partie de mise en prise (521) de ladite trajectoire de guidage (5) est agencée à une intersection entre ledit premier segment opérationnel (41) et ledit deuxième segment de collecte (42).

9. Dispositif de stockage (1) selon l'une quelconque des revendications précédentes, dans lequel des bras radiaux adjacents (4) sont montés mutuellement espacés dans une direction circonférentielle, de façon à permettre à un élément sous la forme d'une bande de définir une boucle pendante entre eux.

10. Appareil de stockage (1) selon l'une quelconque des revendications précédentes, dans lequel lesdits bras radiaux (4) sont agencés espacés circonférentiellement autour dudit axe longitudinal (A).

11. Appareil de stockage (1) selon l'une quelconque des revendications précédentes, dans lequel chacun desdits dispositifs de support (6) a un partie agrandie (613, 614) dans une direction radiale, configurée afin d'empêcher un contact entre des éléments sous la forme de bande, supportés dans des positions circonférentiellement adjacentes.

12. Appareil de stockage (1) selon l'une quelconque des revendications précédentes, dans lequel ledit moyen de mise en prise comprend, pour chaque dispositif de support (6), une paire de brides latérales (611, 612) radialement espacées et configurées afin de venir en prise avec ladite trajectoire de guidage (5) de préférence du bas vers le haut.

13. Appareil de stockage (1) selon la revendication précédente, dans lequel ledit logement de réception (61) est défini entre lesdites deux brides latérales (611, 612).

14. Dispositif de stockage (1) selon l'une quelconque des revendications précédentes, dans lequel chacun desdits dispositifs de support (6) a un élément espaceur (63) par rapport à un autre dispositif de support monté adjacent au même bras radial (4).

15. Appareil de stockage (1) selon l'une quelconque des revendications précédentes, comprenant un moyen d'actionnement de rotation (200) desdits bras radiaux (4) et/ou de ladite trajectoire de guidage (5).

16. Appareil de stockage (1) selon l'une quelconque des revendications précédentes, comprenant un moyen de couplage avec un actionnement qui est externe auxdits bras radiaux (4) et/ou à ladite trajectoire de guidage (5).

17. Appareil de stockage (1) selon l'une quelconque des revendications précédentes, dans lequel ledit bâti (2) peut être déplacé par rapport au plancher où l'on marche, portant, par exemple, une ou plusieurs roues (20).

18. Appareil de stockage (1) selon l'une quelconque des revendications précédentes, dans lequel ledit bâti (2) comprend une plate-forme (21), de préférence horizontale, sur laquelle ledit arbre (3) est monté.
